(19) Europäisches Patentamt
European Patent Office
Office européen des brevets

(11) **EP 1 865 202 B1**

(12) **EUROPÄISCHE PATENTSCHRIFT**

(45) Veröffentlichungstag und Bekanntmachung des Hinweises auf die Patenterteilung:
**11.08.2010 Patentblatt 2010/32**

(51) Int Cl.:
***F04D 13/06*** *(2006.01)*

(21) Anmeldenummer: **07009460.2**

(22) Anmeldetag: **11.05.2007**

(54) **Wasserpumpe für Teiche, Aquarien, Springbrunnen und dergleichen**

Water pump for ponds, aquariums, fountains and similar

Pompe à eau pour étangs, aquariums, fontaines et analogues

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **08.06.2006 DE 102006027001**

(43) Veröffentlichungstag der Anmeldung:
**12.12.2007 Patentblatt 2007/50**

(73) Patentinhaber: **Oase GmbH**
**48477 Hörstel-Riesenbeck (DE)**

(72) Erfinder:
• **Hanke, Andreas**
**65520 Bad Camberg (DE)**

• **Lambers, Herbert**
**48477 Hörstel (DE)**

(74) Vertreter: **Bünemann, Egon et al**
**Busse & Busse Patentanwälte**
**Grosshandelsring 6**
**49084 Osnabrück (DE)**

(56) Entgegenhaltungen:
**EP-A- 1 850 010          WO-A-02/35098**
**DE-A1- 4 301 675       DE-A1- 4 438 130**
**US-A1- 2005 214 135**

**Beschreibung**

Die Erfindung betrifft eine Wasserpumpe für Teiche, Aquarien, Springbrunnen oder dergleichen nach dem Oberbegriff des Anspruchs 1. Die Wasserpumpe soll für einen Leistungsbereich zwischen etwa 100 und 900 Watt ausgelegt sein. Derartige, im Teichbereich schon relativ große Pumpen weisen in der Praxis Asynchronmotoren auf, die einen hohen Materialaufwand haben und daher verhältnismäßig teuer sind. Auch ist deren Wirkungsgrad oft nicht zufriedenstellend.

Kleine Wasserpumpen werden teilweise bereits von Synchronmotoren angetrieben, die jedoch an aufwendige Steuerungseinrichtungen angebunden werden müssen. Hier fällt teilweise die Abdichtung der elektrischen Teile und Verbindungen schwer.

Bekannt sind Kühlwasserpumpen für Fahrzeuge (US 2005/0214135 A1, aus dem die Merkmale des Oberbegriffs des Anspruchs 1 hervorgehen, Pumpen für Heizungskreisläufe (WO 02/35098 A1) und Gebläsemotoren (DE 43 01 675 A1), die jedoch für diese speziellen Anwendungen konzipiert sind, für einen Unterwassereinsatz nicht vorgesehen werden und hohe Gestehungskosten aufweisen.

Die Erfindung befaßt sich daher mit dem Problem, eine Wasserpumpe zu schaffen, deren Wirkungsgrad gegenüber herkömmlichen Pumpen der gleichen Leistungsklasse erhöht ist und die günstiger zu fertigen und komfortabel zu betreiben ist.

Dieses Problem wird erfindungsgemäß durch eine Wasserpumpe mit den Merkmalen des Anspruchs 1 gelöst. Durch die Verwendung eines elektronisch kommutierten Motors kann der Wirkungsgrad der Pumpe in einem Leistungsbereich von etwa 100 bis 900 Watt erheblich erhöht werden, wobei die Herstellung des Pumpenmotors mit einem Stator aus einem Paket jeweils einteiliger Blechschnitte material- und kostengünstig zu bewirken ist. Indem eine Steuerelektronik zur Motorsteuerung direkt in die Pumpe integriert, innerhalb des Motorgehäuseteils angeordnet und mit dem Stator und den Spulen der Steuerelektronik wasserdicht vergossen wird, läßt sich ein eventueller Reparaturbedarf der Pumpe minimieren, da alle wesentlichen elektrischen und elektronischen Bauteile zusammengefaßt und durch den Verguß perfekt gegen Wassereindringen geschützt sind.

Hinsichtlich Wirkungsgrad und Kosten kann die Pumpe optimiert werden, wenn als Rotor ein zweipoliger Permanentmagnet und ein Stator mit sechs Statorpolen und dementsprechend auf diesen aufgenommenen sechs Spulen verwendet wird. Der zweipolige Permanentmagnetrotor kann im wesentlichen aus einem einteiligen, zweipoligen Magnetring bestehen, der diametral magnetisiert ist. Ein solcher ist einfach und somit kostengünstig herzustellen.

Der Stator besteht erfindungsgemäß aus einer Vielzahl aufeinandergestapelten Statorblechen, die einteilig gestanzt werden. Dies verringert den Montageaufwand gegenüber mehrteilig aufgebauten Statoren, bei denen die Statorpole einzeln eingesetzt sind.

Weitere Vorteile und Einzelheiten ergeben sich aus den Unteransprüchen und einem in den Figuren dargestellten Ausführungsbeispiel, das im folgenden beschrieben wird; es zeigen:

Fig. 1     eine perspektivische Außenansicht einer erfindungsgemäßen Pumpe,

Fig. 2     einen Längsschnitt durch die Pumpe aus Fig. 1,

Fig. 3     einen Querschnitt durch den Stator des Pumpenmotors in der Ebene 111 der Fig. 2 bei Montage der Spulen,

Fig. 4     den Gegenstand aus Fig. 3 mit vollständig montierten Spulen und

Fig. 5     eine perspektivische Darstellung des Gegenstands aus Fig. 4 ohne Wicklungen auf den Spulen.

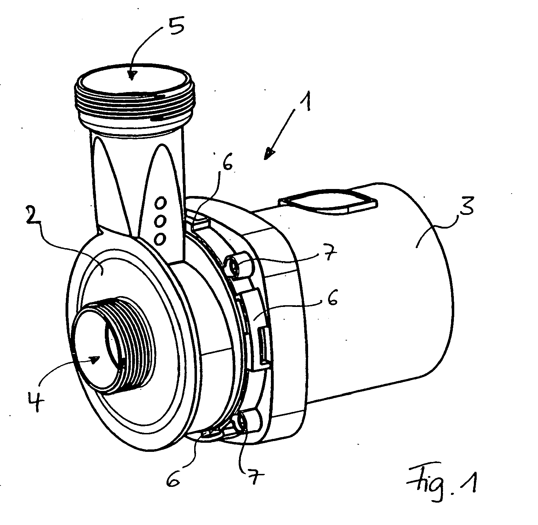

Die in Fig. 1 dargestellte Pumpe besitzt ein Gehäuse 1, das im wesentlichen aus einem Pumpengehäuseteil 2 und einem Motorgehäuseteil 3 besteht. Das Pumpengehäuseteil 2 verfügt über eine Ansaugöffnung 4 und eine Austrittsöffnung 5 für das zu pumpende Wasser. Die beiden Gehäuseteile 2, 3 sind miteinander auf einfache Weise verbunden, beispielsweise wie dargestellt über eine Bajonettverbindung 6 mit zusätzlicher Verschraubung 7.

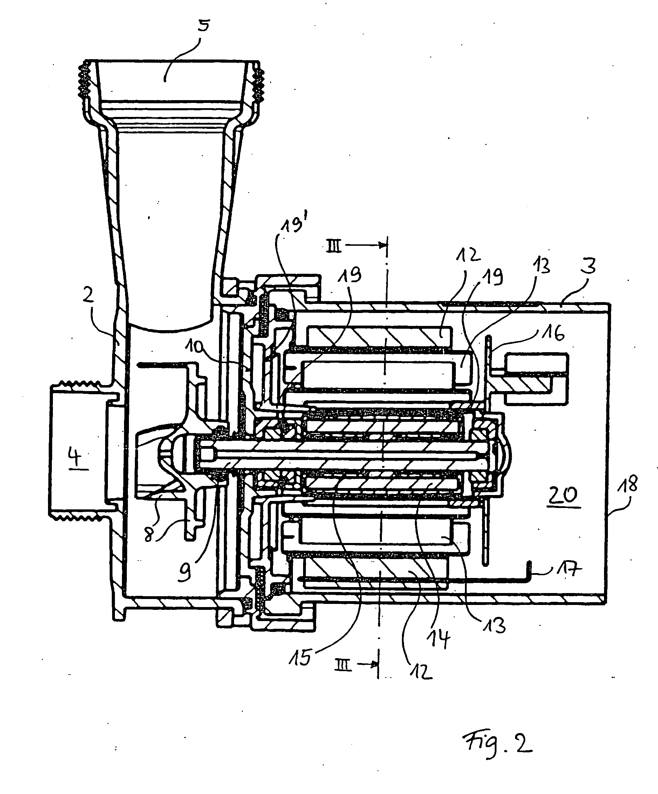

Das Innere der Pumpe ist in Fig. 2 im Schnitt dargestellt. Zwischen der Ansaugöffnung 4 und der Austrittsöffnung 5 ist im Pumpengehäuseteil 2 ein Laufrad 8 auf einer vorzugsweise aus Keramik hergestellten Welle 9 angeordnet, das gemeinsam mit der Welle 9 von einem im Motorgehäuse 3 angeordneten elektronisch kommutierten Motor (EC-Motor) rotierend angetrieben wird. Die Welle 9 erstreckt sich dabei vom Pumpengehäuseteil 2 in das Motorgehäuseteil 3 hinein, wobei der Motor von dem Laufrad 8 mechanisch durch ein Lagerschild 10 abgeschirmt ist.

Der Motor besteht im wesentlichen aus einem feststehenden Statorblechpaket 12, auf dem ebenfalls feststehende Spulen 13 aufgenommen sind, sowie einem Rotor 14, der bei der dargestellten Ausführungsform vorteilhaft als zweipoliger Permanentmagnet ausgebildet ist. Zwischen Rotor 14 und Welle 9 befindet sich mit beiden Teilen fest verbunden ein vorzugsweise massiver und geschlossener Eisenring 15, der den magnetischen Fluß des Motors merklich erhöht.

An der Motorrückseite ist eine Platine 16 angeordnet, die die gesamte Steuerelektronik beinhaltet. Schließlich verfügt der Motor über einen Erdkontakt 17 am Stator 12 und ein Erdungsbelch 18 an der rückwärtigen Seite des Motorgehäuseteils 3.

Zur Abdichtung des wasserdurchflossenen Gehäuseteils 2 gegenüber dem die elektrischen Komponenten aufnehmenden Gehäuseteil 3 sind der Rotor 14 mit allen beweglichen Teilen und der 12 mit allen stromdurchflossenen Teilen voneinander durch ein den Rotor 14 umgebendes Spaltrohr 19 getrennt. Zum Pumpengehäuseteil 2 hin verbreitet sich das Spaltrohr 19 mit einem großen kragenartigen Flansch 19' zur vollständigen Trennung zwischen Pumpengehäuseteil 2 und Motorgehäuseteil 3. Das Innere des gesamten Motorgehäuseteils 3 ist sämtliche Freiräume ausfüllend vergossen, z.B. mit Kunstharz. Die Vergußmasse 20 umschließt damit auch die gesamte Steuerelektronik 16, so daß diese nicht nur gegen Feuchtigkeit, sondern auch mechanisch gegen Vibrationen geschützt ist. Gleichzeitig stützt die Vergußmasse 20 auch das Spaltrohr 19, und dieses kann kostengünstig aus äußerlich nicht verstärktem Kunststoff gefertigt sein.

Die Steuerelektronik 16 kann eine nicht näher dargestellte Signalauswertungseinheit beinhalten, durch die empfangene Signale zur Drehzahlregelung des Pumpenmotors eingesetzt werden. Die Steuersignale können direkt auf die an den Motor übermittelte Netzspannung aufmoduliert werden. Dadurch entfällt die Notwendigkeit einer aufwendigen Phasen-Anschnittsteuerung zur Drehzahlregelung der Pumpe, wie sie bislang für konventionelle Motoren eingesetzt werden muß. Die Bedienung zur Drehzahlregelung kann insbesondere über einen über eine Fernbedienung ansteuerbaren Zwischenstecker erfolgen, der zwischen dem Netzstrom und dem Stromversorgungskabel für die Pumpe angebracht wird. Dieser Zwischenstrecker beinhaltet ein Empfangsmodul, das die von der Fernbedienung abgegebenen Signale zur Änderung der Motordrehzahl empfängt. Im Zwischensteckerelement werden diese Signale dann auf die Netzspannung aufmoduliert und dadurch an die Steuerelektronik der Pumpe weitergegeben. Das Zwischensteckerelement übernimmt damit nur die Rolle der Signalweitergabe, so daß keine Leistungselektronik erforderlich ist.

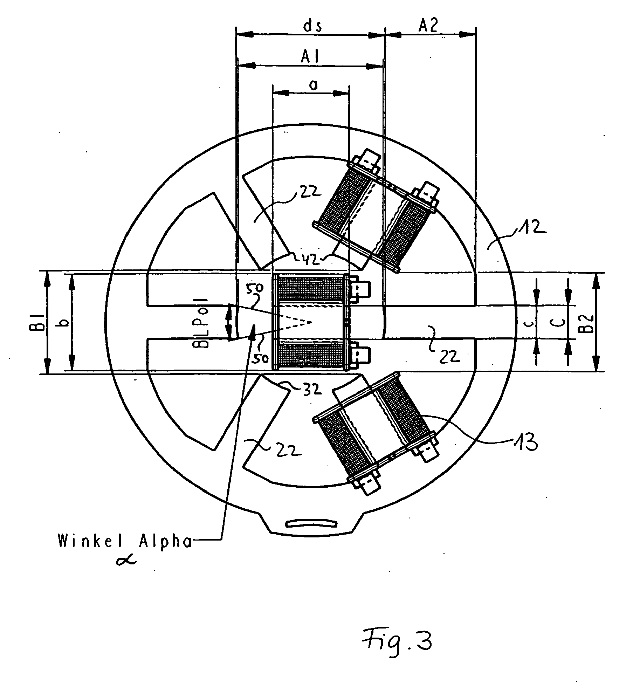

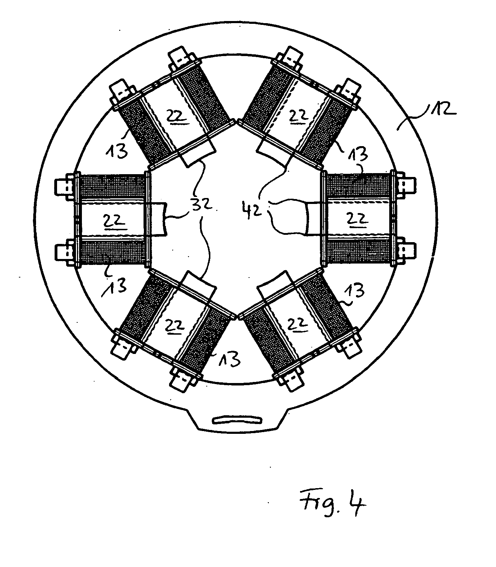

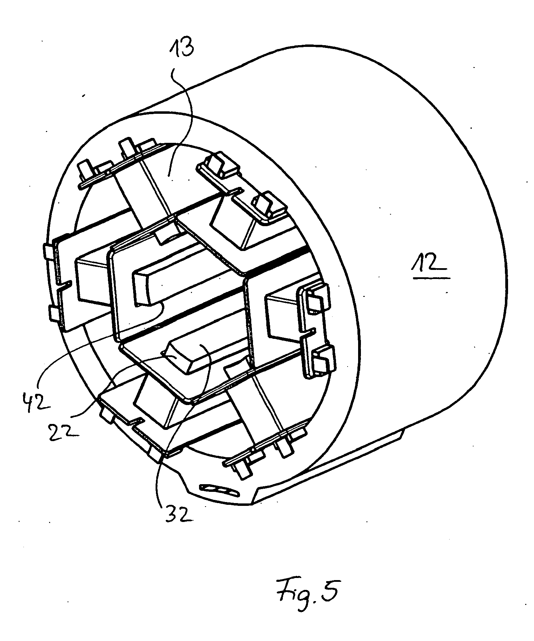

Bei der erfindungsgemäßen Ausführungsform sind der Stator 12 und die zugeordneten Spulen 13 bevorzugt so ausgebildet, daß die Spulen 13 bei der Montage von den Innenseite aus auf Statorpole 22 des Stators 12 aufgeschoben werden können. Dies und der Aufbau des Stators 12 mit den Spulen 13 ist in den Fig. 3 bis 5 näher dargestellt. Durch das Aufschieben der Spulenkörper 13 entfällt die Notwendigkeit der Verwendung teurer Einziehmaschinen zum Wickeln der Spulen, wie es bei anderen einteiligen Blechschnitten mit innenseitig ausgebildeten Polschuhen notwendig ist. Die Statorpole 22 des Stators 12 der erfindungsgemäßen Pumpe sind daher innenseitig im wesentlichen ohne Verbreiterungen auszubilden, so daß das Aufschieben der Spule 13 möglich ist.

Die Geometrieverhältnisse, die ein Aufschieben der Spulen 13 auf die Statorpole 22 ermöglichen, sind im wesentlichen in Fig. 3 dargestellt. Dazu muß die Länge a der Spulen 13 sowohl kleiner sein als der minimale Abstand A1 zweier gegenüberliegender Polinnenseiten als auch kleiner als die Länge A2 der einzelnen Statorpole 22. Außerdem muß die Breite b der Spulen 13 geringer sein als der minimale Abstand B1 zweier Polinnenkanten 42 jeweils übernächster Pole 22, d.h. zwischen denen sich genau ein weiterer Statorpol 22 befindet. Die Breite b der Spulen 13 muß zudem kleiner als der minimale Abstand B2 zweier Spulenaußenkanten im eingebauten Zustand sein, zwischen denen sich wiederum noch eine weitere Spule 13 bzw. ein weiterer Statorpol 22 befindet. Schließlich ist die Breite c der Statorpole 22 kleiner als die Innenbreite C der Spulen 13 zu wählen.

Die erfindungsgemäße Pumpe ist dahingehend optimiert, daß einerseits ihre Abmessungen möglichst klein sein sollten, andererseits jedoch ihr Wirkungsgrad möglichst hoch, und das bei verbesserter Montagefreundlichkeit. Zur Erhöhung des Wirkungsgrades bei vorgegebenen Maximalabmessungen müssen die Geometrieverhältnisse so gewählt werden, daß die Spulen 13 einerseits noch aufgeschoben werden können und andererseits möglichst viele Wicklungen auf den Spulen 13 untergebracht werden können. Dazu ist eine Bogenlänge BL der Statorpole 22 zu definieren. Würde man im Inneren des Stators 12, in dem der Rotor 14 rotiert, einen maximal großen imaginären Kreis unterbringen, der die Statorpolinnenseiten 32 genau berührt, so könnte die Summe der Bogenlängen BL sämtlicher Pole 22 genau der Hälfte des Umfangs des definierten Kreises entsprechen. Zugunsten der unterzubringenden Kupfermenge auf den Spulenwicklungen und zur Vermeidung von Flußstreuungen wird vorzugsweise die Bogenlänge BL jedes Pols 22 jedoch um ca. 11 % bis 12 % gegenüber der soeben definierten ursprünglichen Länge reduziert.

Vorteilhaft kann ein Winkel $\alpha$ zwischen zwei sich aus der Statormitte erstreckenden, die Polinnenkanten 42 des Statorpols tangierenden Geraden 50 angegeben werden, der ca. zwischen 0,88 mal 360° geteilt durch die Anzahl n der Statorpole 22 und ca. 0,89 mal 360° geteilt durch die Anzahl n der Statorpole 22 liegt. Bei so optimierten Bedingungen werden die Spulen 13 in die in Fig. 3 dargestellte Öffnung ds eingeführt und dann bis zum Anschlag auf die Pole 22 aufgeschoben.

Der Stator 12 der dargestellten Ausführungsform hat genau sechs Pole 22. Je nach Anforderung ist es auch möglich, den Motor mit einem Stator 12 mit drei, neun, zwölf, fünfzehn etc. Polen auszustatten. Jedoch werden bei mehr als sechs Polen 22 die Abstände für die Wicklungen der Spulen 13 sehr eng, so daß sich der Montage- und Kostenaufwand erhöht. Ein nur dreipoliger Motor hingegen hat einen verringerten Wirkungsgrad.

Die erfindungsgemäße Pumpe zeichnet sich durch hohe Montagefreundlichkeit, geringe Herstellungskosten, einen hohen Wirkungsgrad und eine optimierte Bedienfreundlichkeit aus. Sie ist wenig reparaturanfällig und daher nahezu wartungsfrei einsetzbar. Durch ihren hohen Wirkungsgrad und dem verringerten Materialaufwand wird sowohl bei der Herstellung als auch beim Betrieb einer derartigen Pumpe der Energieaufwand minimiert.

**Patentansprüche**

1. Wasserpumpe für Teiche oder dergleichen, mit einem Gehäuse (1), das einen eine Ansaugöffnung (4) und eine Austrittsöffnung (5) aufweisenden Pumpengehäuseteil (2), in dem ein Laufrad (8) mit einer Welle (9) rotierbar angeordnet ist, und einen Motorgehäuseteil (3) umfaßt, in dem ein elektronisch kommutierter Elektromotor mit einem Stator (12) mit mehreren auf Statorpolen (22) angeordneten Spulen (13) und einem in diesen rotierenden Rotor (14) aufgenommen ist, wobei der Stator (12) aus einem Paket jeweils einteiliger Blechschnitte besteht und der als ein zweipoliger Permanentmagnet ausgebildete Rotor (14) und der Stator (12) durch ein Spaltrohr (19) voneinander getrennt sind, **dadurch gekennzeichnet, daß** die innenseitig im wesentlichen ohne Verbreiterungen ausgebildeten Statorpole (22) jeweils von der Innenseite des Stators (12) aus aufgeschobene Spulen (13) aufweisen, diese Komponenten gemeinsam mit einer Steuerelektronik (16) für den Motor im Motorgehäuseteil (3) angeordnet werden und in diesem der Stator (12) mit den Spulen (13) sowie der Steuerelektronik (16) wasserdicht vergossen ist, derart, dass das Innere des gesamten Motorgehäuseteils (3) mit sämtliche Freiräume ausfüllender Vergußmasse (20) versehen ist.

2. Wasserpumpe nach Anspruch 1, **dadurch gekennzeichnet, daß** das Spaltrohr (19) aus nicht äußerlich verstärktem Kunststoff besteht.

3. Wasserpumpe nach Anspruch 1 oder 2, **dadurch gekennzeichnet, daß** zwischen Rotor (14) und Welle (9) ein massiver, zumindest im wesentlichen geschlossener Eisenring (15) angeordnet ist.

4. Wasserpumpe nach einem der Ansprüche 1 bis 3, **dadurch gekennzeichnet, daß** die Steuerelektronik (16) eine Signalauswertungseinheit umfaßt, die auf die empfangene Netzspannung aufmodulierte Signale auswertet und zur Drehzahlregelung des Pumpenmotors verwertet.

5. Wasserpumpe nach einem der Ansprüche 1 bis 4, **dadurch gekennzeichnet, daß** für den Stator (12) und die Spulen (13) folgende geometrische Bedingungen gelten:

$$a < A1,$$

$$a < A2,$$

$$b < B1,$$

$$b < B2,$$

$$c < C.$$

mit:

a = Länge der Spulen (13),
A1 = minimaler Abstand zweier gegenüberliegender Polinnenseiten (32),
A2 = Länge der Statorpole (22),
b = Breite der Spulen (13),
B1 = minimaler Abstand zweier Polinnenkanten, zwischen denen sich genau ein weiterer Statorpol (22) befindet,
B2 = minimaler Abstand zweier Spulenaußenkanten im eingebauten Zustand, zwischen denen sich genau eine weitere Spule (13) befindet,
c = Breite der Statorpole (22),
C = Innenbreite der Spulen (13).

**6.** Wasserpumpe nach einem der Ansprüche 1 bis 5, **dadurch gekennzeichnet, daß** die innere Bogenlänge (BL) eines Statorpols (32) um etwa 11% bis 12% gegenüber einem durch die doppelte Anzahl der Statorpole (22) geteilten die Statorpolinnenseiten (32) berührenden Kreisumfang reduziert ist.

**7.** Wasserpumpe nach einem der Ansprüche 1 bis 6, **dadurch gekennzeichnet, daß** für den Stator (12) etwa folgende geometrische Bedingung gilt:

$$0{,}88 \times 360° / n <= \alpha <= 0{,}89 \times 360° / n$$

mit:

$\alpha$ = Winkel zwischen zwei sich aus der Statormitte erstreckenden, die Polinnenkanten (42) eines Statorpols (22) tangierenden Geraden (50),
n = Anzahl der Statorpole (22).

**Claims**

**1.** Water pump for ponds or the like, having a body (1) which comprises a pump-body portion (2) having an intake opening (4) and an outlet opening (5), in which pump-body portion (2) an impeller (8) having a shaft (9) is rotatably arranged, and which comprises a motor-housing portion (3) in which is held an electronically commutated electric motor, which electronically commutated electric motor has a stator (12) having a plurality of windings (13) arranged on stator poles (22) and has a rotor (14) rotating in the said windings (13), the stator (12) comprising a set of laminations which are each in one piece, and the stator (12) and the rotor (14), which takes the form of a two-pole permanent magnet, being separated from one another by a gap-creating tube (19), **characterised in that** the stator poles (22), which are each formed on the inside, to be substantially free of any widening, have windings (13) which are slid on from the interior of the stator (12), these components, together with an electronic control system (16) for the motor, are arranged in the motor-housing portion (3), and the stator (12), together with the windings (13) and the electronic control system (16), is encapsulated in the said motor-housing portion (3) to be sealed against water, in such a way that the interior of the entire motor-housing portion (3) is provided with an encapsulating material (20) which fills all the open spaces.

**2.** Water pump according to claim 1, **characterised in that** the gap-creating tube (19) is composed of plastics material which is not reinforced externally.

**3.** Water pump according to claim 1 or 2, **characterised in that** a solid iron ring (15) which is at least substantially closed is arranged between the rotor (14) and the shaft (9).

**4.** Water pump according to one of claims 1 to 3, **characterised in that** the electronic control system (16) comprises a signal analysing unit which analyses signals modulated onto the mains voltage received and uses them to regulate the speed of the pump motor.

**5.** Water pump according to one of claims 1 to 4, **characterised in that** the following geometrical conditions apply to the stator (12) and the windings (13):

$$a < A1,$$

$$a < A2,$$

$$b < B1,$$

$$b < B2,$$

$$c < C,$$

where:

a = length of the windings (13),
A1 = minimum distance between two opposite inside faces (32) of poles
A2 = length of the stator poles (22),
b = width of the windings (13),
B1 = minimum distance between the inner edges of two poles between which there is precisely one further stator pole (22),
B2 = minimum distance in the installed state between the outside edges of two windings between which there is precisely one further winding (13),
c = width of the stator poles (22),
C = inside width of the windings (13).

**6.** Water pump according to one of claims 1 to 5, **characterised in that** the arcuate length (BL) of the inside face of a stator pole (32) is reduced by approximately 11% to 12% from the circumference of a circle touching the inside faces (32) of the stator poles divided by twice the number of stator poles (22) which there are.

**7.** Water pump according to one of claims 1 to 6, **characterised in that** the following geometrical condition applies to the stator (12):

$$0.88 \times 360° / n <= \alpha <= 0.89 \times 360° / n$$

where:

a = the angle between two straight lines (50) which extend from the centre of the stator and are tangent to the inner edges (42) of a stator pole (22),
n = the number of stator poles (22) which there are.

**Revendications**

**1.** Pompe à eau pour des étangs ou similaires, avec un carter (1) qui comporte une partie de carter de pompe (2) présentant une ouverture d'aspiration (4) et une ouverture de sortie (5), dans laquelle est disposée de manière rotative une roue de roulement (8) avec un arbre (9), et une partie de carter de moteur (3), dans laquelle est reçu un moteur électrique à commutation électronique avec un stator (12) doté de plusieurs bobines (13) disposées sur des pôles du stator (22) et un rotor (14) tournant dans celui-ci, le stator (12) se composant d'un paquet de coupes de tôle respectivement d'un seul tenant et le rotor (14) réalisé comme un aimant permanent bipolaire et le stator (12) étant séparés l'un de l'autre par une gaine (19), **caractérisée en ce que** les pôles de stator (22) réalisés côté intérieur essentiellement sans élargissement présentent respectivement des bobines (13) poussées depuis le côté intérieur du stator (12), **en ce que** ces composants sont disposés conjointement avec une électronique de commande (16) pour le moteur dans la partie de carter de moteur (3) et **en ce que** dans celui-ci, le stator (12) avec les bobines (13) ainsi qu'avec l'électronique de commande (16) est coulé de manière étanche à l'eau de telle manière que l'intérieur de la partie de carter de moteur (3) entière est pourvue de masse de remplissage (20) remplissant tous les interstices.

**2.** Pompe à eau selon la revendication 1, **caractérisée en ce que** la gaine (19) se compose de matière plastique non renforcée extérieurement.

**3.** Pompe à eau selon la revendication 1 ou 2, **caractérisée en ce qu'**un anneau en fer (15) massif, au moins essentiellement fermé est disposé entre le rotor (14) et l'arbre (9).

**4.** Pompe à eau selon l'une quelconque des revendications 1 à 3, **caractérisée en ce que** l'électronique de commande (16) comporte une unité d'évaluation des signaux qui évalue des signaux modulés sur la tension de réseau reçue et les utilise pour réguler le régime du moteur de la pompe.

**5.** Pompe à eau selon l'une quelconque des revendications 1 à 4, **caractérisée en ce que** pour le stator (12) et les bobines (13) s'appliquent les conditions géométriques suivantes :

$$a < A1,$$

$$a < A2,$$

$$b < B1,$$

$$b < B2,$$

$$c < C.$$

avec :

a = longueur des bobines (13),
A1 = distance minimale entre deux côtés intérieurs de pôle opposés (32),
A2 = longueur des pôles de stator (22),
b = largeur des bobines (13),
B1 = distance minimale entre deux arêtes intérieures de pôle, entre lesquelles se trouve précisément un autre pôle de stator (22),
B2 = distance minimale entre deux arêtes extérieures de bobine à l'état intégré, entre lesquelles se trouve précisément une autre bobine (13),
c = largeur des pôles de stator (22),
C = largeur intérieure des bobines (13).

**6.** Pompe à eau selon l'une quelconque des revendications 1 à 5, **caractérisée en ce que** la longueur intérieure de l'arc (BL) d'un pôle de stator (32) est réduite d'environ 11% à 12 % par rapport à une circonférence touchant les côtés intérieurs de pôle de stator (32), divisée par le nombre double de pôles de stator (22).

**7.** Pompe à eau selon l'une quelconque des revendications 1 à 6, **caractérisée en ce que** pour le stator (12) s'applique par exemple la condition géométrique suivante :

$$0,88 \times 360° \, / \, n <\, = \alpha <\, = 0,89 \times 360° \, / \, n$$

avec

$\alpha$ = angle entre deux droites (50) tangentes aux arêtes intérieures (42) d'un pôle de stator (22), s'étendant à partir du milieu du stator,
n = nombre de pôles de stator (22).

Fig. 1

Fig. 2

Fig. 3

Fig. 4

Fig.5

**EP 1 865 202 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050214135 A1
- WO 0235098 A1
- DE 4301675 A1